# EUROPÄISCHE PATENTSCHRIFT

(11) **EP 2 547 032 B1**
(45) Veröffentlichungstag und Bekanntmachung des Hinweises auf die Patenterteilung: **23.05.2018**
(21) Anmeldenummer: 11401548.0
(22) Anmeldetag: 12.07.2011
(51) Int. Cl.: H04L 7/04

(54) **Verfahren zur Datenpaketverarbeitung bei sehr hohen Datenraten und extrem schlechten Übertragungsbedingungen**
Method for data package processing at very high data rates and in extremely bad transfer conditions
Procédé de traitement de paquets de données à des débits de données très élevés et conditions de transmission très mauvaises

(43) Veröffentlichungstag der Anmeldung: 16.01.2013
(73) Patentinhaber: ADVA Optical Networking SE, 82152 Martinsried / München (DE)
(72) Erfinder: Lawin, Mirko, 98617 Meiningen (DE)
(74) Vertreter: Eder, Thomas

(56) Entgegenhaltungen:
- EP-A1- 0 794 485
- WO-A2-2008/126051
- US-A1- 2008 031 284

## Beschreibung

Die Erfindung betrifft ein Verfahren zur Synchronisation von Datenpaketen, welche mit sehr hohen Fehlerraten behaftet sind, sowie deren Datenratenanpassung mittels adaptiver fehlertoleranter Mustererkennung, insbesondere in der optischen Nachrichtentechnik bei Datenraten größer 40 Gigabit pro Sekunde und höherwertig modulierten Signalen.

In der Datenübertragung insbesondere bei der Übertragung digitaler Datenpakete (Frames) werden sogenannte Synchronisationsworte (Sync-Pattern) zur Synchronisierung des Empfängers verwendet. Der Empfänger findet mit deren Hilfe in dem seriellen Datenstrom den Beginn der Frames. Derzeit übliche, nach diesem Prinzip arbeitende Frame-Synchronisierungsmechanismen stoßen bei sehr hohen Bitfehlerraten, beispielsweise höher als 10⁻² bzw. 1 Prozent, höher als 5 Prozent oder gar höher als 10 Prozent, gerade zur Inbetriebnahme der Systeme an Grenzen. Bei Bandbreiten in der Größenordnung von 40 Gigabit pro Sekunde und darüber, insbesondere in der faseroptischen Nachrichtenübertragung, sind meist permanent Bitfehler im Datenstrom vorhanden. Hier ist eine Vorwärts-Fehlerkorrektur (FEC - Forward Error Correction) nötig, um die vorhandenen Bitfehler mathematisch zu korrigieren.

Da die FEC in der Regel erst nach einer erfolgreichen Frame-Synchronisation arbeiten kann, werden immer leistungsfähigere Synchronisationsmechanismen benötigt. Zur Erreichung noch höherer Datenraten werden speziell in der faseroptischen Datenübertragung zunehmend Übertragungsverfahren mit höherwertiger Modulation eingesetzt. Die hierfür nötige komplexere Übertragungstechnik sowie die, aufgrund dieser Modulationsarten, meist schlechten Signal-Rauschverhältnisse erschweren zusätzlich die Übertragung. FEC - Verfahren zur Korrektur des Datenfeldes im Frame müssen deshalb ständig verbessert werden.

Für die Frame-Synchronisation als Basis der Frameverarbeitung sind aus o.g. Gründen ebenfalls neue fehlertolerante Verfahren nötig, da die Leistungsfähigkeit und/oder Anwendbarkeit der bereits existierenden Methoden zur fehlertoleranten Frame-Synchronisation unter Extrembedingungen eingeschränkt ist.

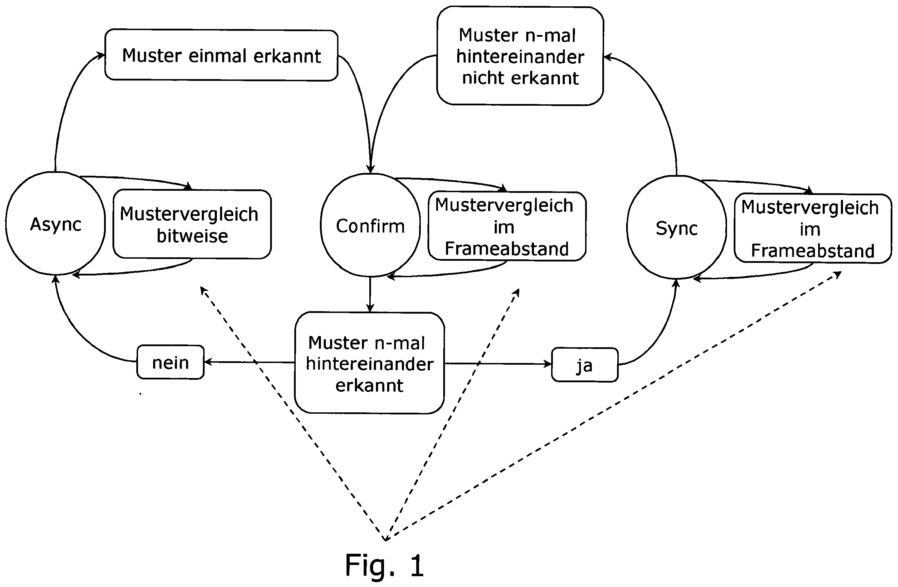

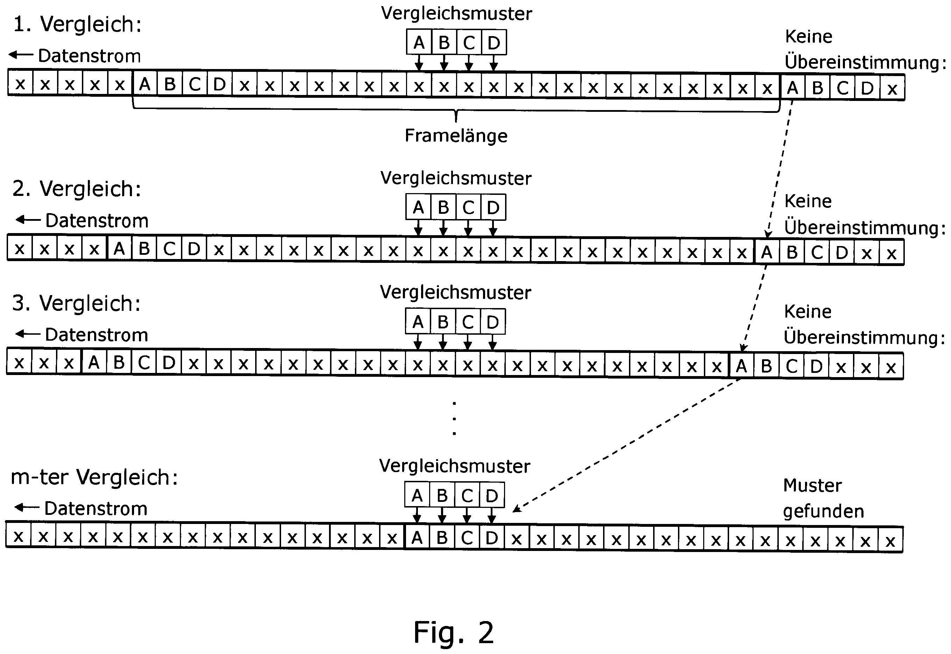

Herkömmliche Verfahren synchronisieren auf bestimmte Bitmuster im Datenrahmenkopf. Dazu werden Zustandsautomaten benutzt, die wie folgt und in Fig. 1 dargestellt arbeiten:
Der Datenstrom wird zuerst im sogenannten "Async-Status", wie in Fig. 2 dargestellt, permanent abgetastet. Sofern kein Bitmuster erkannt wird, werden die Daten jeweils um ein Bit verschoben (bitweiser Mustervergleich). Erkennt der Mechanismus das erwartete Bitmuster, beipielweise - wie in Fig. 2 dargestellt - nach einem m-ten Vergleich, das erste Mal, wird ein sogenannter "Vorsync-Status" eingenommen und ein Zähler gestartet, welcher die durchlaufenden Daten zählt. Hat dieser Zähler einen Zählerstand erreicht, welcher der Datenpaketlänge entspricht (Framelänge), müsste jetzt wieder der Datenrahmenkopf mit dem entsprechenden Synchronisationsmuster vorbei kommen. Dies wird mit einem erneuten Bitmustervergleich getestet. Ist der Vergleich positiv, wird der Datenzähler wieder zurückgesetzt und neu gestartet, also um eine komplette Framelänge verschoben. Der Vorgang (für diesen Mustervergleich im Frameabstand werden die Daten immer um eine komplette Framelänge verschoben) wiederholt sich mehrmals. Wird innerhalb einer festgelegten Anzahl von Bit-Vergleichen im Datenrahmenkopf einmal oder mehrmals das Bitmuster nicht erkannt, geht das System in den "Async-Status" zurück und das Abtasten beginnt von vorn. Ist der Vergleich nach einer definierten Anzahl von Wiederholungen jedes Mal positiv, nimmt der Zustandsautomat den "Sync-Status" ein. Man geht davon aus, dass nach mehrmaligem, im Datenrahmenkopf richtig erkanntem Synchronisationsmuster eine Synchronisierung erreicht ist. Im "Sync-Status" erfolgt nun periodisch ein Bitmuster-Vergleich im Datenrahmenkopf. Ist der Vergleich einmal oder mehrere Male negativ, wird der "Vorsync-Status" eingenommen. Dort wird wieder periodisch der Datenrahmen nach dem Sync-Muster abgetastet. Nach einer vorher festgelegten Anzahl von Fehlvergleichen fällt das System in den "Async-Status". Wird vorher das Bitmuster wieder mehrmals richtig erkannt, nimmt der Zustandsautomat wieder den "Sync-Status" ein.

Diese Verfahrensweise funktioniert allerdings nur, wenn im Datenrahmenkopf im Mittel die Summen-Bitfehleranzahl so gering ist, dass die erwarteten Synchronisationsmuster entsprechend oft erkannt werden. Sind die Fehlvergleiche größer als im Zustandsautomaten vorgegeben, kann der Mechanismus nicht synchronisieren. In diesem Falle könnte man durch Variieren der Vorgabeanzahl an Fehlvergleichen im Zustandsautomaten evtl. eine Synchronisierung ermöglichen. Das funktioniert allerdings nur mit frei programmierbaren Systemen. Mit üblicherweise in der Daten-Kommunikation verwendeten elektronischen Bausteinen ist das nicht möglich. Sind im Datenrahmenkopf permanent Bitfehler vorhanden, versagen die Verfahren, die nach dem oben beschriebenen Prinzip ohne Fehlertoleranz arbeiten, gänzlich.

Die OTN-Synchronisationsmechanismen sind sehr eng an die Prinzipien der SDH und SONET Protokolle angelehnt. Auch in der Ethernet-Welt wird die Datenrahmensynchronisation mit Hilfe fester Bitmuster realisiert. FibreChannel-Protokolle sind ähnlich spezifiziert.

Allen oben genannten Mechanismen ist gemeinsam, dass auf ein genau definiertes Bitmuster synchronisiert wird. Ist das Bitmuster nicht exakt gleich, dann schlägt der jeweilige Vergleich fehl. Eine gewisse Unschärfe kann durch Mehrfachvergleich erreicht werden - dieser ist aber nicht variabel und bei permanenten Bitfehlern im Vergleichsmuster unwirksam.

In der DE 697 21 364 T2 bzw. dem analogen US-Patent 5,943,377 ist weiterhin ein Verfahren für eine fehlertolerante und schnelle Erfassung eines Bitmusters in einem Bitmusterstrom vorgeschlagen. Hierbei wird ein Kandidatenbitmuster in der Form einer bestimmten Anzahl von Bits aus dem Bitstrom gebildet. Dann wird das Kandidatenbitmuster als eine Adresse zum Adressieren von Positionen in einer Tabelle verwendet. Jede Position in der Tabelle umfasst Trefferinformationen, die einen Treffer definieren, wenn die Adresse einer Position beliebigen der vorbestimmten Bitmuster oder den Verfälschungen, die innerhalb der Fehlertoleranz liegen, entspricht. Weiterhin ist aus der US 2008/0031284 A1 ein Verfahren gemäß dem Oberbegriff des Anspruchs 1 bekannt.

Wie sich anhand von Versuchen herausgestellt hat, ermöglichen alle vorgenannten Verfahren und Systeme jedoch keine Datenpaketsynchronisation und Datenratenanpassung bei extrem hohen Bitfehlerraten. Bei permanenten Bitfehlern im Synchronisationsmuster des Datenrahmens und/oder im Idle-Daten-Kennzeichnungsfeld sind diese Verfahren prinzipbedingt unbrauchbar.

Der vorliegenden Erfindung liegt daher die Aufgabe zugrunde, eine Datenpaketsynchronisation und Datenratenanpassung bei extrem hohen Bitfehlerraten, sowie bei permanenten Bitfehlern im Synchronisationsmuster des Datenrahmens und/oder im Idle-Daten-Kennzeichnungsfeld, zu ermöglichen.

Diese Aufgabe wird erfindungsgemäß durch ein Verfahren mit den Merkmalen des Anspruchs 1 gelöst.

Das erfindungsgemäße Verfahren der adaptiven fehlertoleranten Mustererkennung ermöglicht auch in Extremfällen eine erfolgreiche Synchronisation. Mittels eines speziellen Hochgeschwindigkeits-Verfahrens wird der Hamming-Abstand zwischen dem n-Bit (vorzugsweise ein oder mehrere Bytes) langen Synchronisationswort bzw. Soll-Muster und dem gerade aktuellen n-Bit langen Daten-Vergleichsmuster bzw. Ist-Muster ermittelt. Der aktuelle Hamming-Abstand wird dann mit dem zugelassenen Hamming-Abstand verglichen. Durch vorzugsweise schrittweises Variieren, insbesondere Erhöhen in Einer-Schritten, angefangen mit einem vorgebbaren Anfangswert (beispielsweise "0"), des zugelassenen Hamming-Abstandes erfolgt ein Anpassen an die aktuelle Bitfehlerrate, wodurch eine erfolgreiche Synchronisation erreicht wird und aufrecht erhalten werden kann. Die Variation des zugelassenen Hamming-Abstandes kann in Echtzeit erfolgen.

Eine weitere wichtige Funktion in der framebasierten Datenübertragung ist die Datenratenanpassung (stuffing) zwischen Frame-Eingangsdaten am Sender und Frame-Ausgangsdaten am Empfänger, welche durch Einfügen entsprechender Füllwörter (Idles) in den Frame erfolgt. Der Empfänger muss erkennen, ob an den entsprechenden Stellen im Frame ein Idle- oder ein Datenwort vorhanden ist. Diese Information liefert ein zusätzliches Daten-Idle-Kennzeichnungsfeld. Daten müssen immer weitergeleitet werden, Idles werden entfernt. Hat man hier noch keinen FEC-korrigierten Frame oder ist die FEC nicht in der Lage, eine entsprechend hohe Bitfehlerzahl zu korrigieren, kann dieses Kennzeichnungsfeld fehlerhaft sein. Dann treten beträchtliche Folgefehler auf, weil die Datenpaketrate temporär nicht mehr stimmt, Daten fehlen oder Idles als Daten weitergeleitet werden.

Um dies zu verhindern, kann ebenfalls die erfindungsgemäße adaptive fehlertolerante Mustererkennung eingesetzt werden. Das erfindungsgemäße Verfahren arbeitet auch hier bis zu einer Fehlerrate von nahe 50% fehlerfrei, d.h. annähernd die Hälfte, nämlich (½ n -1) der Bits im Kennzeichnungsfeld als Ist-Muster dürfen gegenüber einem Sollmuster falsch sein. Dies kann unter Nutzung der aktuell verwendeten Bandbreitenzuschläge keine FEC leisten.

Weitere vorteilhafte Ausgestaltungen der Erfindung ergeben sich aus den abhängigen Ansprüchen.

Die Erfindung wird nachfolgend anhand in der Zeichnung dargestellter Ausführungsbeispiele näher erläutert.

In der Zeichnung zeigen:
- Fig. 1: eine schematische Blockbilddarstellung einer state-machine for frame alignment und
- Fig. 2: eine schematische Darstellung eines Mustervergleichs.

In einem ersten Ausführungsbeispiel erfolgt bei einer Synchronisation mit erfindungsgemäßer adaptiver fehlertoleranter Mustererkennung die Synchronisierung mit einer state-machine wie in Fig. 1 dargestellt und vorstehend beschrieben. Der Unterschied zu bekannten Verfahren liegt in der Art und Weise, wie das Bitmuster bzw. ein Ist- mit einem Soll-Bitmuster, verglichen wird. Bisher wird bei jedem Vergleich festgestellt, ob die Bitmuster identisch sind, oder aber die Hamming-Distanz innerhalb einer gewissen Grenze liegt.

Bei dem neuen fehlertoleranten Verfahren kann dagegen durch Variieren der erlaubten Hamming-Distanz eine Synchronisierung auch unter extremen Bedingungen erreicht werden. Dazu werden das Soll- und das Ist-Bitmuster bitweise verglichen. Dabei wird die Anzahl der fehlerhaften Bits erfasst.

Das Problem hierbei ist, dass diese Fehler-Aufaddierung in Echtzeit, d.h. innerhalb eines Taktes des Zustandsautomaten erfolgen muss. Ein Mustervergleich in dieser Zeit ist trivial, aber die Berechnung der Summe fehlerhafter Bits in einem Bitmuster benötigt mehr als das. Zuerst müssen die fehlerhaften Bits detektiert werden, danach ist eine Mehrfach-Addition nötig. Darauf folgt ein Vergleich der gefundenen Fehleranzahl mit der vorher eingestellten zulässigen Fehleranzahl. In der Praxis bei Datenraten im hohen Gigabitbereich arbeiten die Zustandsautomaten mit Frequenzen um die 170MHz und höher. Das bedeutet, dass die Erfassung und Berechnung der fehlerhaften Bits in weniger als einer 170 Millionstel Sekunde (= 5,9ns) erfolgen muss. Dies ist auch mit der schnellsten aktuell verfügbaren Logik problematisch.

Ein Verfahren, wie das Problem unter diesen Bedingungen gelöst werden kann, arbeitet wie folgt:
Jedes Bit in dem zu prüfenden Bitmuster wird mit dem entsprechenden Bit in der Vergleichsmaske über eine logische XOR Funktion verknüpft. Im Ergebnis erhält man einen Vektor mit einer "1" für unterschiedliche Bits und einer "0" für gleiche Bits an der entsprechenden Bitposition. Die Ergebnisse des Einzelbitvergleiches müssen nun addiert werden, um die Anzahl fehlerhafter Bits zu erhalten. Hier besteht das Problem, dass eine Bitaddition eine Logik benötigt, die aus einem oder mehreren (Voll-)Addierern besteht. Diese Addierer müssen bei längeren Bitmustern und damit größeren möglichen Bitfehleranzahlen kaskadiert werden. Bisherige Lösungen in diskreter Logik waren bei hohen Datenraten deshalb nicht schnell genug. Als Alternative nutzte man für die Addition Tabellen in Form eines oder mehrerer Speicher. Der Speicher arbeitet mit Adresseneingängen und Datenausgängen. Um eine Bit-Addition mit Hilfe eines Speichers zu realisieren, bildet jedes Datenwort die Summe der gesetzten Bits seines Adresswortes. So kann das Ergebnis der oben erwähnten XOR-Operation einfach an den Speicher angelegt werden und am Ausgang des Speichers erscheint die Summe der gesetzten Bits. Es müssen allerdings alle Bit-Varianten als Adressen vorhanden sein. Das erfordert bei langen Sync-Pattern relativ große Tabellen. Bei integrierten RAMs ist dies prinzipiell erst mal kein Problem. Jedoch bei Nutzung von integrierten Speichern (RAMs) in FPGAs müssen die Daten allerdings dorthin und die Ergebnisse wieder zurück geroutet werden. Das kann dazu führen, dass die harten Zeitanforderungen nicht erfüllt werden können.

Zur Lösung dieser Probleme können beispielsweise "Look-Up-Tables" verwendet werden. Diese Look-up-Tables sind Bestandteil der Basislogik, welche flächig über den ganzen Chip verteilt ist. Durch entsprechende Programmierung lassen sich aus Look-Up Tables kaskadierte Volladdierer bilden. Für eine Optimierung der Rechenzeit arbeitet man bei der Addition der Bitfehler mit mehreren Teiladditionen. Der Ergebnisvektor der XOR-Operation wird in mehrere Teile zerlegt. Diese werden dann mit Hilfe der Look-Up-Tables parallel aufaddiert. Da bei diesen Additionen immer kleine Summanden verwendet werden, kann man sehr gut mit Look-Up-Tables arbeiten. Durch die Parallelisierung der Operationen wird die Berechnung zudem sehr schnell. Am Ende werden wiederum die Ergebnisse der Teiladditionen zur Gesamtsumme aufaddiert. Das kann ebenfalls mit Look-Up-Tables erfolgen. Durch Variation der Anzahl der Zwischenergebnisse und der Anzahl der aufaddierten Teile aus den Einzelbitvergleichen lässt sich das Verfahren so optimieren, dass die strengen zeitlichen Anforderungen erfüllt werden können. Nach Erhalt der Fehlersumme wird diese mit der vorgegebenen zulässigen Maximal-Fehleranzahl verglichen und entsprechend ausgewertet. Dies geschieht alles innerhalb eines Frame-Taktes. Man kann die Bitmusterprüfung auch auf mehrere Takte verteilen. Dies erfordert aber eine spezielle Anpassung des Datenrahmens und des Zustandsautomaten.

Vorteilhafterweise funktioniert das erfindungsgemäße Verfahren mit jedem Standardprotokoll. Aber auch jedes proprietäre Protokoll kann hinsichtlich der Synchronisierungsleistung verbessert werden. Das Verfahren ist zudem adaptiv, weil festgelegt werden kann, wie viele fehlerhafte Bits zugelassen werden.

In der Praxis werden Bitfehler bei hohen Datenraten mittels Fehlerkorrekturverfahren (FEC-Forward-Error-Correction) korrigiert. Diese Verfahren können Bitfehler in gewissen Grenzen korrigieren. Eine FEC-Fehlerkorrektur kann jedoch in der Regel erst nach der Datenrahmensynchronisation erfolgen. Die mit derzeitig verfügbaren FEC-Mechanismen korrigierbaren Fehlerraten liegen in einem Bereich, in dem herkömmliche Synchronisationsmethoden noch funktionieren. Sie funktionieren aber nicht bei Inbetriebnahme bzw. Hochfahren komplexer Systeme nach jedem Einschalten. Gerade bei höherwertigen Modulationsverfahren sind multiple Einstellungen nötig: z.B. Phasen- und Amplitudenangleichung paralleler Sendekanäle, die ein Symbol bilden; Angleichung der Laser-Polarisationsebenen vor den optischen Modulatoren; Einstellung der Abtastschwellen an den optischen Empfängern; Optimierung der Abtastschwellen und anderer Empfangs-Parameter an den elektrischen Hochfrequenz-Deserialisern; Optimierung der optischen Leistung an mehreren Stellen und vieles mehr. Die einzelnen Parameter sind oft voneinander abhängig. Die Bitfehlerrate ist im nicht abgeglichenen System nicht messbar. Die FEC kann hier auch noch nicht funktionieren. Es gibt deshalb keinen Anhaltspunkt für eine gezielte Parametereinstellung. Mit Hilfe der adaptiven fehlertoleranten Mustererkennung kann man hier einen Anfang finden:
Durch schrittweises Erhöhen, vorzugsweise in Einer-Schritten, der zugelassenen Fehler im Datenrahmenkopf kann eine Synchronisation erreicht werden. Das funktioniert auch bei permanenten Fehlern im Datenrahmenkopf. Hierbei wird in der Regel von einem Anfangswert "0" ausgegangen, wobei es jedoch auch denkbar ist, insbesondere bei vorbekannten oder einschätzbaren Mindestfehlern mit einem höheren Wert zu beginnen.

Wenn die zugelassene Fehleranzahl zu klein ist, kann bei höherer Fehlerzahl im Sync-Pattern keine Synchronisation erfolgen. Ist die zugelassene Fehleranzahl zu groß, insbesondere gleich oder größer der halben Länge des Bitmusters [>(½ n -1)], ist es möglich, dass der Zustandsautomat aus dem "Async-Status" heraus falsch auf Bitmuster im Datenfeld synchronisiert.

Durch das erfindungsgemäße Variieren der zugelassenen Fehleranzahl kann der optimale Wert gefunden werden, indem der Synchronisationszustand permanent beobachtet und optimiert wird. Wenn beim Hochfahren des Systems mit PRBS-Generatoren am Sender und PRBS-Fehlerzählern am Empfänger gearbeitet wird, kann parallel dazu auch eine Beobachtung der Fehlerzähler erfolgen. Es ist auch möglich, Protokollfunktionen zu benutzen, die für eine Fehlerbewertung der Übertragungsstrecke zur Verfügung stehen.

Nun können die einzelnen Systemparameter optimiert werden. Für höherwertige Modulationsverfahren gelten beispielsweise als solche:
Sendeseitig:
- Einstellung der Hochfrequenzverstärker für die verschiedenen Modulationszweige
- Amplitudenangleichung der amplitudenmodulierenden Signale untereinander
- Amplitudenangleichung der amplitudenmodulierenden Signale zu den phasenmodulierten Signalen
- Synchronisierung der von einer Quelle abgeleiteten und unterschiedlich geteilten Referenztakte für Modulatoren, Hochfrequenz-ICs.
- Abstimmung der Takte zu den jeweiligen Signalen
- Abstimmung der Laserpolarisationsebenen der verschiedenen Modulationszweige
- Phasen- und Amplitudenanpassung der zusätzlich benötigten Modulatoren für RZ-Betrieb (Modulationsart: Return to Zero)
- Justierung Amplituden- und Phasenverhältnisses der einzelnen Modulationszweige
- Einstellungen der Sendeparameter der Hochfrequenz-Serializer:
   - Phasen
   - Amplituden
   - Interne Settings
      - Phasenbeziehung zwischen den internen Sendekanälen
      - Ausgangsverstärkung
      - etc.
- Einstellung der Verstärkung der optischen Verstärker auf der Strecke und empfangsseitig:
- Einstellen der Verstärkung und der Abtastschwellen an den jeweiligen optischen Empfängern
- Einstellen der Empfangsparameter an den Hochfrequenz-Deserializern
   - Phasen
   - Amplituden
   - Interne Settings
   - Phasenbeziehung zwischen den internen Abtastkanälen
   - Eingangsverstärkung der einzelnen internen Abtastkanäle
   - Einstellungen der PLLs:
      - Systemparameter der einzelnen PLL-Eingangsstufen
      - etc.

Durch Kontrollieren des Synchronisationszustandes und/oder der Fehlerzähler kann jetzt überprüft werden, ob die Veränderung des jeweiligen Parameters zu einer Verbesserung oder einer Verschlechterung der Übertragung führt. Durch Optimierung der Übertragungseigenschaften auf diese Weise erreicht man eine Fehlerrate, bei der die FEC arbeiten kann. Am Ende kann die zugelassene Fehlerrate auf die nun minimierte Fehlerzahl im Datenrahmenkopf angepasst werden und das System ist optimal eingestellt. Hierbei kann beispielsweise eine schrittweise Verringerung um "-1" durchgeführt werden, bis keine Erkennung erfolgt, und als optimale zulässige maximale Fehlerzahl der vorletzte Wert eingestellt werden.

Das erfindungsgemäße Verfahren ist nicht nur beim Hochfahren der Systeme und Optimieren der Systemparameter hilfreich. Auch wenn sich die Übertragungseigenschaften der Strecke im Betrieb plötzlich oder über längere Zeiträume verschlechtern, verlieren herkömmliche Systeme viel früher die Datenrahmensynchronisation als Systeme mit adaptiver fehlertoleranter Mustererkennung. Das heißt, hier kann die FEC viel länger arbeiten. Dazu ist es vorteilhaft, die zugelassene Fehlerzahl im Datenrahmenkopf nach dem Optimieren nicht oder nicht zu weit abzusenken.

Die Wahrscheinlichkeit, das dem gesuchten Bitmuster ähnlichste Bitmuster im Datenrahmenkopf zu finden, ist höher, als dieses im restlichen Datenrahmen der Fall ist. Zusätzlich wird im "VorSync-" bzw. "Sync-State" die Datenrahmenlänge ausgewertet. Wenn die zugelassene Fehleranzahl optimiert wurde, ist diese Wahrscheinlichkeit am höchsten. Es ist nicht möglich, von vornherein eine feste zugelassene Fehleranzahl vorzugeben, da nicht bekannt ist, wie die Nutzdaten aussehen, d.h. die Bitmuster im Datenfeld sind nicht vorhersehbar. Es ist auch möglich, dass sich die Bitfehler an bestimmten Stellen im Frame häufen, was vom Modulationsverfahren, vom Daten-Bitmuster oder von den Parameter-Einstellungen abhängen kann. Die Optimierung des Synchronisationszustandes sollte deshalb immer so erfolgen, dass man die Anzahl der zugelassenen Fehler von Null an aufwärts erhöht, bis eine Synchronisation erfolgt. Nun prüft der Zustandsautomat nur noch das Sync-Pattern im Datenrahmenkopf. Solange nun die tatsächliche Fehleranzahl im Datenrahmenkopf kleiner ist als die zugelassene Fehleranzahl, wird der Synchronisationszustand nicht mehr verlassen. Der Zustandsautomat lässt hierbei eine definierte maximale Anzahl von Fehlprüfungen zu. Steigt die Fehleranzahl im Datenrahmenkopf irgendwann über die zulässige Anzahl, wird nach dem Vorsync-Status (mit definierter Anzahl von erlaubten Fehlvergleichen) wieder der "Async-Status" eingenommen und die Suche nach dem Sync-Pattern beginnt von vorn. Dazu wird wiederum der Datenstrom bitweise geschoben und dabei das Sync-Pattern gesucht.

Erhöht man im "Sync-Zustand" die zulässige Fehleranzahl, verringert sich die Wahrscheinlichkeit, dass dieser Zustand wieder verlassen wird. Sollte die Fehleranzahl doch irgendwann einmal so hoch steigen, dass der "Sync-Zustand" in den "Async-Zustand" wechselt, kann es passieren, dass der Sync-Zustand nicht mehr erreicht werden kann, weil der Zustandsautomat auf das nächste Pattern im Datenrahmen rastet, welches die Fehlertoleranzbedingungen erfüllt. Es wird dann der Sync-Zustand eingenommen, und nicht mehr verlassen, solange die Anzahl der Fehler im falschen Pattern kleiner bleibt als die zugelassene Fehlerzahl.

Für jedes System ist deshalb die zugelassene Fehleranzahl für den Datenrahmenkopf so einzustellen, dass die Fehlertoleranz ausreicht, um zu einer sicheren Synchronisation zu führen, aber andererseits auch keine Fehl-Synchronisation auf Daten erfolgen kann. Bei optimierten Systemen, d.h. bei minimierter Bitfehlerrate, sollte deshalb die zugelassene Fehleranzahl so weit abgesenkt werden, dass immer eine sichere Synchronisation auf das Sync-Pattern erfolgt und gleichzeitig eine Synchronisation auf die Daten verhindert wird.

Um den Takt aus den Daten zu gewinnen und diese damit am Empfänger richtig abzutasten, werden sogenannte Clock und Data Recoveries - (CDR) verwendet. Diese Komponenten sind als Einzelbausteine, sowie auch integriert im Einsatz. Es gibt verschiedene Verfahren der Taktgewinnung aus den Daten. In der Praxis hat allerdings nur ein Verfahren verbreitete Anwendung gefunden: Eine grob abgestimmte PLL (Phase-Locked-Loop) wird mit einem Signal beaufschlagt, welches durch Gleichrichtung des Datensignals gewonnen wird. Die PLL rastet dann auf die Datenfrequenz ein und liefert einen Takt, der frequenzgleich und phasenstarr zum Datensignal ist. Schlechte Signalqualitäten können sich negativ auf das Einrastverhalten der CDR auswirken. Das größte Problem sind hierbei lange NullFolgen oder lange Eins-Folgen. Heute sind die CDRs so dimensioniert, das bis zu 150 aufeinanderfolgende Nullen oder Einsen noch nicht zu Ausrasten führen. Die CDR rastet auf einen permanent anliegenden Referenz-Takt ein, wenn kein Datensignal anliegt. Sobald Daten anliegen, rastet die CDR auf die Daten ein, wobei die Datenrate im Fangbereich von meist +/- 1000ppm der Vorgabefrequenz liegen muss. Dieser Fangbereich wird üblicherweise mit Hilfe eines Filters eingeschränkt. So wird gewährleistet, dass die CDR nicht auf falsche Datenraten einrasten kann. Aufgrund dieser Eigenschaften ist das Einrasten der CDR auch bei sehr verrauschtem (mit sehr hohen Bitfehlern behaftetem) Eingangssignal garantiert. Die Voraussetzung zur Anwendung der adaptiven fehlertoleranten Mustererkennung ist somit gegeben.

Zusammengefasst ergeben sich folgende Vorteile bei einer Synchronisation mit erfindungsgemäßer adaptiver fehlertoleranter Mustererkennung:
a) Durch Anwendung adaptiver fehlertoleranter Mustererkennung ist eine Datenübertragung bei hohen und höchsten Bitfehlerraten möglich.
b) Ebenso kann mit Hilfe dieses Verfahrens die Inbetriebnahme und Optimierung von Datenübertragungssystemen ermöglicht werden.
c) Zudem kann die Hamming-Distanz mit Hilfe der vorstehend beschriebenen Logik in Höchstgeschwindigkeit berechnet und ausgewertet werden. Die dazu nötigen Additionsoperationen erfolgen mit Hilfe von Look-up Tables. Herkömmliche Verfahren erlaubten bei hohen Datenraten >40Gbps nur einen Vergleich mit einer festen Hamming-Distanz-Vorgabe, wobei sich diese Vorgabe auf 0, 1 und >1 beschränkt. Die vorgestellte Logik ist nun in der Lage, jede mögliche Hamming-Distanz zu berechnen und mit einem in Echtzeit variablen Wert zu vergleichen.
d) Weiterhin kann durch Splittung der Addition in mehrere parallele Operationen mit geteiltem Vergleichsmuster die nötige Berechnungsgeschwindigkeit erreicht werden.
e) Alle Standard-Protokolle mit ausreichend langen Synchronisationswörtern werden durch das Verfahren unterstützt.
f) OTN-Standard - Aktuell mit OTU-4/ODU-4; 100G-Datenraten:
   OTN-Frames nach ITU_T G.709 können auch unter Bedingungen empfangen und synchronisiert werden, bei denen bisher übliche Synchronisationsverfahren versagen:
   Hier werden hier die OA1 (=11110110) und OA2 (=00101000) Bytes, die als Frame Alignment Signal (FAS OH Byte) im Frame Alignment Overhead des OTUk/ODUk Frames mehrfach vorkommen, für die Synchronisierung verwendet. Das geschieht mit dem üblichen Zustandsautomaten. An der Stelle der Sync-Pattern-Prüfung wird lediglich der Vergleich fester Muster durch den Mechanismus der adaptiven fehlertoleranten Mustererkennung ersetzt. Das ist mit programmierbarer Logik problemlos möglich. Nun kann durch Variieren der zugelassenen Fehleranzahl im Sync-Pattern eine Synchronisation auch unter widrigsten Bedingungen erreicht werden.
g) Im SDH/SONET-Bereich existieren die sogenannten A1 (=11110110) und A2(=00101000) Bytes. Auffällig ist, dass die Synchronisations-Bitmuster von SDH/SONET und OTN identisch sind. Die Verfahrensweise zur Anwendung der fehlertoleranten Mustererkennung hier ist die Gleiche wie unter f) beschrieben.
h) Ethernet: In der Ethernetwelt bei Datenraten bis 1 Gigabit/Sekunde(Gb/s) werden sogenannte Kommazeichen zur Synchronisation verwendet. Diese Kommazeichen (K28.5 = 10111100) werden in Kombination mit anderen Bitsequenzen benutzt, um z.B. den Start des Frames (SOF = Start of Frame), das Ende des Frames (EOF = End of Frame), Idles oder andere Steuerzeichen zu bilden. SOF besteht z.B. aus 4 definierten Bytes, angeführt von einem K28.5. Zur Anwendung der adaptiven fehlertoleranten Mustererkennung für Ethernetframes bis 1 Gb/s kann man auf dieses Bitmuster synchronisieren.
i) Fibre-Channel: Bei Fibre-Channel Protokollen existieren ebenfalls die K28.5 Kommazeichen. Die Steuerwörter unterscheiden sich etwas vom Ethernet-Protokoll. Jedoch ist auch hier immer das K28.5 Byte das Erste von 3 weiteren dedizierten Bytes. So hat man auch hier immer 4 Bytes als Synchronisationsmöglichkeit.
j) 10G Ethernet: Bei einer Datenrate von 10Gigabit Ethernet wird anstatt der 8B/10B Kodierung z.B. die 64B/66B Kodierung angewendet. Diese Kodierung erlaubt es, Bandbreite zu sparen. Der Bandbreitenzuschlag (Overhead) für die Kodierung beträgt hier nur ca. 3% gegenüber 25% bei der 8B/10B Kodierung. Die Synchronisierung erfolgt über die ersten beiden Bits (Präambel) im Frame. Kodierung: Ist die Präambel 01, dann sind die folgenden 64 Bit Nutzdaten. Ist die Präambel 10, dann folgt ein sogenanntes 8bit - Type-Feld und danach 56 Bit Kontroll- und Steuerinformationen, deren Bedeutung sich nach den Type-Feld richtet. Die Präambeln 00 und 11 werden nicht verwendet und erzeugen beim Empfang Fehler. Die Anwendung der adaptiven fehlertoleranten Mustererkennung ist hier etwas komplizierter, da man hier nur 2 Bit als Synchronisationsmuster zur Verfügung hat. Man muss hier zusätzlich das Type-Feld auswerten. Es sind 15 Byte-Typen definiert. Damit existieren 15 erlaubte 10-bit breite Sync-Pattern für Kontroll- und Steuerinformationen. Diese Varianten können beim Vergleich getestet werden.
k) 10G Fibre-Channel: Das 10G Fibre-Channel Protokoll arbeitet ebenfalls mit der 64B/66B Kodierung. Hier gilt für die Anwendung der adaptiven fehlertoleranten Mustererkennung das Gleiche wie bei 10G Ethernet.
l) 40G/100G: Bei Datenraten von 40Gb/s - 100Gb/s werden komplexe Frames eingesetzt (siehe 6.1 f - ITU_T G.709). Die Verfahrensweise ist unter f) schon beschrieben.
m) Video: Video-Datenströme wurden anfangs analog übertragen. Heute sind Videos digital. Als Übertragungsprotokoll wird üblicherweise Ethernet verwendet. Damit sind für die Anwendung der adaptiven fehlertoleranten Mustererkennung wieder alle Voraussetzungen gegeben wie unter h) Ethernet beschrieben.
n) Zeichensuchverfahren: Zeichensuch- und Vergleichsverfahren, wie z.B. Suchen in Texten oder Mustern in Speichern arbeiten normalerweise mit Mikroprozessoren. Dieser kann die Hamming-Distanz auf die übliche Weise mit Hilfe des internen Rechenwerkes berechnen. Durch den Einsatz programmierbarer Logik (FPGAs) und Implementierung der adaptiven fehlertoleranten Mustererkennung, kann hier eine deutliche Erhöhung der Rechengeschwindigkeit und zusätzlich eine adaptive Fehlertoleranz erreicht werden.
o) Inbetriebnahme und Parametereinstellung komplexer Systeme mit höherwertiger Modulation bei hohen Bitfehlerraten werden mit Hilfe der adaptiven fehlertoleranten Mustererkennung deutlich erleichtert bzw. erst möglich gemacht.
p) Wenn sich die Übertragungseigenschaften der Strecke im Betrieb plötzlich oder über längere Zeiträume verschlechtern, verlieren herkömmliche Systeme viel früher die Datenrahmensynchronisation als Systeme mit adaptiver fehlertoleranter Mustererkennung.
q) Weitere erhebliche Verbesserungen des Synchronisationsverhaltens sind möglich, durch die Variation der zugelassenen Fehl-Erkennungen des Sync-Patterns im Sync-Zustand, sowie die Variation der nötigen erfolgreichen Erkennungen, bevor der Sync-Zustand eingenommen wird - in Verbindung mit der Variation der zugelassenen Hamming-Distanz des Sync-Patterns im Datenstrom gegenüber dem Vergleichsmuster.

In einem zweiten Ausführungsbeispiel erfolgt eine Datenratenanpassung mit der erfindungsgemäßen adaptiven fehlertoleranten Mustererkennung.
Beim Multiplexen von mehreren Datenkanälen (Clients) in einen Datenrahmen ist eine Datenratenanpassung für die Übertragungstrecke (Line) notwendig. Dies geschieht im Allgemeinen mittels FIFOs (First-In-First-Out Speicher) an jedem Client-Eingang wie folgt: Die eingehenden Daten werden mit der jeweiligen Client-Datenrate in den FIFO geschrieben. Den entsprechenden Takt gewinnt man jeweils mit einer sog. Clock und Datenrecovery Komponente (CDR). Mit dem Line-Takt (Gewonnen aus einer festen Taktquelle) werden die Daten aus dem FIFO gelesen und in den Datenrahmen gepackt. Fällt der FIFO-Füllstand unter einen definierten Wert, dann werden anstelle von Daten Füllzellen (Idles) an entsprechende Stellen im Datenrahmen geschrieben. Dadurch steigt der Füllstand wieder. Die Länge des Datenrahmens ist so dimensioniert, dass auf diese Weise unterschiedliche Datenraten von Client und Line-Seite ausgeglichen werden können.

Auf der Empfangsseite müssen diese Füllzellen wieder entfernt werden, um einen kontinuierlichen Datenstrom zu erhalten. Die Kennzeichnung, ob es sich an den entsprechenden Stellen um Idles oder Daten handelt, erfolgt in zusätzlichen Feldern durch ein oder mehrere Bits. Sind diese Felder fehlerhaft, werden entweder Daten fälschlich entfernt oder Idles als Daten weitergeleitet. Beides führt zu einer größeren Anzahl von Folgefehlern, da gleichzeitig ebenfalls die Datenratenanpassung für eine gewisse Zeit fehlschlägt. Herkömmliche Verfahren zur Daten-Idle-Erkennung arbeiten hier ebenfalls wie bei der Datenrahmenkopf-Erkennung mit festen Bitmustern ohne Fehlertoleranz. Erschwerend kommt bei der Daten-Idle-Erkennung hinzu, dass man hier nicht mit Zustandsautomaten über mehrere Datenrahmendurchgänge arbeiten kann.

Das Bitmuster kommt nur einmal vorbei und muss sofort als Daten- oder Idle-Kennzeichnung erkannt werden. Bei hohen Bitfehlerraten und entsprechend hohen Bitfehlern im Daten-Idle-Kennzeichnungs-Feld führt das zu erheblichen Problemen bei der Datenübertragung. Auch hier kann die adaptive fehlertolerante Mustererkennung helfen: Das Daten-Idle-Kennzeichnungs-Feld ist größer als ein Bit. Der Bitmustervergleich erfolgt in der Weise, dass wiederum jedes Bit einzeln geprüft wird. Danach erfolgt ein Aufaddieren der fehlerhaften und/oder der richtig erkannten Bits. Die Anzahl der fehlerhaften Bits gegenüber der Anzahl der richtig erkannten Bits gibt nun Aufschluss darüber, ob es sich mit höherer Wahrscheinlichkeit um eine Daten oder Idle-Kennzeichnung handelt. Dieses Verfahren arbeitet deshalb vorteilhafterweise sogar dann noch zuverlässig, wenn annähernd jedes zweite Bit falsch ist. Herkömmliche Verfahren arbeiten dagegen schon dann fehlerhaft, wenn nur ein Bit im Daten-Idle-Kennzeichnungsfeld falsch ist.

Zusammengefasst ergeben sich folgende Vorteile bei einer Datenratenanpassung mit erfindungsgemäßer adaptiver fehlertoleranter Mustererkennung:
a) Die bei jeder seriellen bzw. gemultiplexten Datenübertragung nötige Datenratenanpassung unter Nutzung der adaptiven fehlertoleranten Mustererkennung ist erheblich robuster gegenüber Bitfehlern, die bspw. durch schlechte Übertragungseigenschaften verursacht werden.
b) Zudem können falsche Datenraten, verursacht durch fehlinterpretierte Idle-Daten Felder, mit Hilfe der adaptiven fehlertoleranten Mustererkennung bis zu Fehlerraten von nahe 0,5 (jedes zweite Bit ist falsch) vollständig verhindert werden.
c) Weiterhin können Folgefehler im ansonsten kontinuierlichen Datenstrom, verursacht durch Fehlinterpretation von Daten als Idles oder umgekehrt, bis zu Fehlerraten von nahe 0,5 ebenfalls vollständig verhindert werden.

Selbstverständlich ist das erfindungsgemäße Verfahren nicht auf die erläuterten Ausführungsbeispiele beschränkt, sondern kann auch in anderen Fällen Anwendung finden.

Im Folgenden werden weitere Ausgestaltungen mit der erfindungsgemäßen adaptiven fehlertoleranten Mustererkennung erläutert:
1. Beispielsweise sind zukünftige Fehlerkorrekturverfahren mit einem Fehlerkorrekturpotenzial denkbar, welches deutlich über den bisherigen Möglichkeiten liegt. Diese benötigen dann eine entsprechend leistungsfähige Datenrahmen-Synchronisation. Dies ist mit der erfindungsgemäßen adaptiven fehlertoleranten Mustererkennung heute schon gegeben. Damit werden Datenübertragungen möglich, bei denen die Bitfehlerrate so hoch ist, dass herkömmliche Synchronisationsmechanismen nicht mehr funktionieren.
2. Wenn im Datenrahmenkopf ausreichend Blöcke vorhanden sind - meist sind sogar bei Standartprotokollen zusätzliche ungenutzte Blöcke vorgesehen - kann für die Datenrahmensynchronisation zusätzlich eine FEC genutzt werden. Die Synchronisation erfolgt dann zuerst mittels der adaptiven fehlertoleranten Mustererkennung. Diese synchronisiert auf das FEC-codierte Muster, welches vorher bekannt ist. Dann wird dieses Muster mit Hilfe einer FEC decodiert, wonach das Sync-Pattern zur Verfügung steht. In der Praxis hat nicht jedes durchlaufende Sync-Pattern gleich viele Fehler. Auch bei hoher Bitfehlerrate, die eigentlich für die FEC zu hoch ist, um eine fehlerfreie Dekodierung zu ermöglichen, können so Sync-Pattern mit temporär weniger Bitfehlern fehlerfrei gemacht werden. Damit kann die Bitfehlerrate im Sync-Pattern im Mittel gesenkt werden. Der FEC-Decoder liefert die Information über die Anzahl der aktuell korrigierten Bitfehler. Durch Aufsummieren dieser Anzahl pro Zeiteinheit ergibt sich ein Wert, der zusätzlich in dem Zustandsautomaten für die adaptive fehlertolerante Mustererkennung verarbeitet werden kann. Mit dem Einregeln dieses Wertes auf einem Minimum hat man einen zusätzlichen Parameter zur Optimierung der Fehlertoleranzanpassung.
3. Die Synchronisierung kann auch umgekehrt erfolgen. Zuerst wird, ähnlich der Veröffentlichung "Every Bit Counts - Frame Synchronization in Jet Propulsion Laboratory's Advanced Multi-Mission Operations System (AMMOS)", Elizabeth (Betsy) Wilson, Jet Propulsion Laboratory, eine bitweise ständige FEC-Decodierung des FEC-codierten Sync-Patterns durchgeführt. Parallel dazu läuft der Zustandsautomat der adaptiven fehlertoleranten Mustererkennung. Eine Synchronisierung kann wiederum durch Variation der zulässigen Hamming-Distanz bei gleichzeitiger Minimierung der korrigierten FEC-Fehler erfolgen.
4. In programmierbaren Bausteinen ist oftmals kein Platz für eine EFEC (Enhanced Forward Error Correction) für die Nutzdaten. Diese EFEC-Verfahren sind besonders leistungsfähig, benötigen immens viel Logik, werden aber bei hohen Bitfehlerraten benötigt. In jedem Datenrahmen existieren bestimmte Blöcke, die für zusätzliche Betriebsdaten, Alarme oder interne Kommunikation genutzt werden. Da diese Blöcke gegenüber den Nutzdaten sehr klein sind, lassen sich hier ebenfalls mit Hilfe einer FEC oder EFEC nur für diese Blöcke die Datenübertragungsfunktionen verbessern. Die Synchronisation erfolgt wie vorstehend unter 2. oder 3. beschrieben. Es können so beispielsweise interne Datenkanäle zwischen Empfänger und Sender fehlerfrei gemacht werden. Damit wird eine Parameteroptimierung für die Optimierung der Datenübertragung auch bei ansonsten hohen Bitfehlerraten im Nutzdatenstrom möglich.
5. Eine etwas einfachere Methode zur Verringerung der Fehler im Sync-Pattern ist die Benutzung des Hamming-Codes zur Fehlerkorrektur des Sync-Patterns. Der Hamming-Code ist ein von Richard Hamming entwickelter linearer fehlerkorrigierender Blockcode. Das Sync-Pattern wird durch die Codierung im Hamming-Code etwas größer, aber der Empfänger ist dadurch in der Lage, eine Fehlerkorrektur durchzuführen. Die Leistungsfähigkeit dieser Bitfehlerkorrektur ist geringer als die einer FEC oder EFEC, die dafür benötigte Logik ist dafür aber sehr klein. Die Hamming-Kodierung kann anstatt einer FEC oder EFEC, wie unter 2., 3. und 4. Beschrieben, alternativ auch mit der adaptiven fehlertoleranten Mustererkennung kombiniert werden.

## Patentansprüche

1. Verfahren zur adaptiven fehlertoleranten Mustererkennung in der Übertragung von digitalen Datenpaketen,
a) bei dem ein aus n-Bit bestehendes Ist-Datenmuster detektiert und mit einem n-Bit Soll-Datenmuster verglichen wird, wobei n ein oder mehrere Bytes entspricht,
b) fehlerhafte und/oder richtig erkannte Bits erfasst werden,
c) fehlerhafte und/oder richtig erkannte Bits jeweils aufaddiert werden,
d) die Anzahl der Fehler der aufaddierten fehlerhaften Bits mit einer vorgebbaren zulässigen maximalen Fehlerzahl verglichen wird,
**dadurch gekennzeichnet, dass**
e) die Anzahl der zulässigen maximalen Fehlerzahl erhöht oder verringert wird, um eine erfolgreiche Synchronisation zu erreichen und aufrecht zu erhalten, wobei bis zu (½ n-1) Bits im Ist-Datenmuster gegenüber dem Soll-Datenmuster fehlerhaft sein dürfen.

2. Verfahren nach Anspruch 1, **dadurch gekennzeichnet, dass** die Erhöhung oder Verringerung der zulässigen maximalen Fehlerzahl schrittweise, ausgehend von einem vorgebbaren Anfangswert, erfolgt.

3. Verfahren nach Anspruch 1 oder 2, **dadurch gekennzeichnet, dass** die zulässige maximale Fehlerzahl aus einem vorgebbaren Verhältnis zwischen der Fehlersumme der aufaddierten fehlerhaften Bits und Anzahl der richtig erkannten Bits eines Musters berechnet wird.

4. Verfahren nach einem der vorhergehenden Ansprüche, **dadurch gekennzeichnet, dass** in Abhängigkeit des Vergleichs der aufaddierten fehlerhaften Bits eines Musters mit der vorgebbaren zulässigen maximalen Fehlerzahl einzelne Systemparameter optimiert werden.

5. Verfahren nach einem der vorhergehenden Ansprüche, **dadurch gekennzeichnet, dass** die vorgebbare zulässige maximale Fehlerzahl nach einem oder mehreren Mustererkennungsdurchläufen bis zu einer maximalen Hamming-Distanz der halben Länge (n/2) des Bitmusters verändert werden kann.

6. Anordnung zur Durchführung eines Verfahrens nach einem der vorhergehenden Ansprüche, welche geeignete Mittel aufweist,
a) um ein aus n-Bit bestehendes Ist-Datenmuster zu detektieren und mit einem n-Bit Soll-Datenmuster zu vergleichen, wobei n ein oder mehrere Bytes entspricht,
b) um fehlerhafte und/oder richtig erkannte Bits zu erfassen,
c) um fehlerhafte und/oder richtig erkannte Bits (jeweils) aufzuaddieren und
d) um die Anzahl der Fehler der aufaddierten fehlerhaften Bits mit einer vorgebbaren zulässigen maximalen Fehlerzahl zu vergleichen und
e) um die Anzahl der zulässigen maximalen Fehlerzahl zu erhöhen oder zu verringern wodurch eine erfolgreiche Synchronisation erreicht wird und aufrecht erhalten werden kann, wobei bis zu (½ n-1) Bits im Ist-Datenmuster gegenüber dem Soll-Datenmuster fehlerhaft sein dürfen.

## Claims

1. A method for adaptive error-tolerant pattern-recognition in the transfer of digital data packets,
a) in which an actual data pattern, consisting of n bits, is detected and compared with a theoretical n-bit data pattern,
wherein n corresponds to one or more bytes,
b) erroneous and/or correctly recognized bits are recorded,
c) erroneous and/or correctly recognized bits are added up in each case,
d) the number of the errors of the added-up erroneous bits is compared with a specifiable permissible maximum error number,
**characterised in that**
e) the number of the permissible maximum error number is increased or reduced in order to achieve and maintain a successful synchronization, wherein up to (½ n-1) bits in the actual data pattern may be erroneous in comparison with the theoretical data pattern.

2. A method according to claim 1, **characterised in that** the increase or the reduction in the permissible maximum error number is effected step by step, starting from a specifiable initial value.

3. A method according to claim 1 or 2, **characterised in that** the permissible maximum error number is calculated from a specifiable ratio between the error total of the added-up erroneous bits and the number of the correctly recognized bits of a pattern.

4. A method according to one of the preceding claims, **characterised in that** individual system parameters are optimized as a function of the comparison of the added-up erroneous bits of a pattern with the specifiable permissible maximum error number.

5. A method according to one of the preceding claims, **characterised in that** the specifiable permissible maximum error number can be changed according to one or more pattern-recognition run-throughs up to a maximum Hamming distance of half the length (n/2) of the bit pattern.

6. An arrangement for carrying out a method according to one of the preceding claims, which has suitable means
a) to detect an actual data pattern, consisting of n bits, and compare it with a theoretical n-bit data pattern,
wherein n corresponds to one or more bytes,
b) to record erroneous and/or correctly recognized bits,
c) to add up erroneous and/or correctly recognized bits (in each case), and
d) to compare the number of the errors of the added-up erroneous bits with a specifiable permissible maximum error number, and
e) to increase or reduce the number of the permissible maximum error number, as a result of which a successful synchronization is achieved and can be maintained, wherein up to (½ n-1) bits in the actual data pattern may be erroneous in comparison with the theoretical data pattern.

## Revendications

1. Procédé de reconnaissance de combinaison adaptative tolérante aux pannes dans la transmission de paquets de données numériques,
a) selon lequel une combinaison de données réelle, composée d'un n-uplet, est détectée et comparée à une combinaison de données attendue d'un n-uplet,
dans lequel n correspond à un ou plusieurs octets,
b) des bits erronés et/ou correctement reconnus sont déterminés,
c) des bits erronés et/ou correctement reconnus sont respectivement cumulés,
d) le nombre des erreurs des bits erronés cumulés est comparé à un nombre maximal admissible prédéfinissable,
**caractérisé en ce que**
e) la quantité du nombre d'erreurs maximal admissible augmente ou diminue pour atteindre et maintenir une synchronisation réussie, dans lequel jusqu'à (1/2 n-1) bits peuvent être erronés dans la combinaison de données réelle par rapport à la combinaison de données attendue.

2. Procédé selon la revendication 1, **caractérisé en ce que** l'augmentation ou la diminution du nombre d'erreurs maximal admissible est effectuée pas à pas à partir d'une valeur initiale prédéfinissable.

3. Procédé selon la revendication 1 ou 2, **caractérisé en ce que** le nombre d'erreurs maximal admissible est calculé à partir d'un rapport prédéfinissable entre la somme d'erreurs des bits erronés accumulés et le nombre des bits correctement reconnus d'une combinaison.

4. Procédé selon l'une quelconque des revendications précédentes, **caractérisé en ce que** des paramètres système individuels sont optimisés en fonction de la comparaison des bits erronés cumulés d'une combinaison avec le nombre d'erreurs maximal admissible.

5. Procédé selon l'une quelconque des revendications précédentes, **caractérisé en ce que** le nombre d'erreurs maximal admissible prédéfinissable peut être modifié après une ou plusieurs passes de reconnaissance de combinaison jusqu'à une distance de Hamming maximale de la demi-longueur (n/2) de la combinaison de bits.

6. Agencement pour exécuter un procédé selon l'une quelconque des revendications précédentes, qui comprend des moyens appropriés
a) pour détecter une combinaison de données réelle composée d'un n-uplet et la comparer à une combinaison de données attendue d'un n-uplet,
dans lequel n correspond à un ou plusieurs octets,
b) pour déterminer des bits erronés et/ou correctement reconnus,
c) pour accumuler (respectivement) des bits erronés et/ou correctement reconnus, et
d) pour comparer le nombre des erreurs des bits erronés accumulés avec un nombre d'erreurs maximal admissible prédéfinissable et
e) pour augmenter ou diminuer la quantité du nombre d'erreurs maximal admissible, moyennant quoi une synchronisation réussie peut être atteinte et maintenue ; dans lequel jusqu'à (1/2 n-1) bits peuvent être erronés dans la combinaison de données réelle par rapport à la combinaison de données attendue.
